(19)

**Europäisches Patentamt**
**European Patent Office**
**Office européen des brevets**

(11) **EP 4 528 588 A1**

(12) **EUROPEAN PATENT APPLICATION**

(43) Date of publication:
26.03.2025 Bulletin 2025/13

(21) Application number: 23203196.3

(22) Date of filing: 12.10.2023

(51) International Patent Classification (IPC):
$G06N\ 3/044^{(2023.01)}$     $G06N\ 3/0455^{(2023.01)}$
$G06N\ 3/0464^{(2023.01)}$     $G06N\ 3/08^{(2023.01)}$

(52) Cooperative Patent Classification (CPC):
G06N 3/044; G06N 3/0455; G06N 3/0464;
G06N 3/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.09.2023 US 202363539193 P

(71) Applicant: Hitachi Energy Ltd
8050 Zürich (CH)

(72) Inventors:
• POLAND, Jan
5415 Nussbaumen (CH)
• SHIRSAT, Ashwin
Apex, 27523 (US)

• DAWIDOWSKI, Pawel
32-010 Malopolskie (PL)
• IU OLDEEN, Joakim
77134 Ludvika (SE)
• KRZYSIAK, Janina
30055 Krakow (PL)
• CHMIELOWIEC, Krzysztof
32-089 Beblo (PL)
• BOMBA, Piotr
26-400 Lipno (PL)
• MARINO, David
Montréal, H2R 2P1 (CA)

(74) Representative: Vossius & Partner
Patentanwälte Rechtsanwälte mbB
Siebertstraße 3
81675 München (DE)

(54) **PRE-TRAINED MESSAGE-PASSING NEURAL NETWORK ELEMENT FOR A SCALABLE NEURAL NETWORK FOR PROCESSING DATA ON POWER GRIDS**

(57) Message-passing neural networks (MPNNs) do not scale well for large graphs, such as large power networks. Accordingly, embodiments of an MPNN element are disclosed. The MPNN element may compress a nodal dimension into a latent dimension before message passing is performed, and then decompress the latent dimension back into the nodal dimension after message passing has been performed. This enables the overarching message-passing neural network to scale to large graphs. In addition, domain information, such as contingency information, and/or a multi-head attention mechanism may be incorporated into the MPNN element. The message-passing neural network may be trained for power-flow analysis, contingency analysis, or any other type of analysis, in the context of a prediction and decision task for a power system.

**FIG. 1**

**Description**

**BACKGROUND**

Field of the Invention

The embodiments described herein are generally directed to machine learning, and, more particularly, to a pre-trained message-passing neural network element that enables a message-passing neural network to be scaled for a large network, such as a power grid.

Description of the Related Art

Machine learning (ML) has gained popularity in data processing for power systems, such as power grids. Deep-learning (DL) models, in particular, are becoming increasingly capable of accomplishing prediction and decision tasks for power grids. The architecture of deep-learning models is a key factor in this success.

In addition, certain artificial neural networks, called graph neural networks (GNNs), have been developed to process data defined by in a graph. An example of a graph neural network is described in "The Graph Neural Network Model," by F. Scarselli et al., IEEE Transactions on Neural Networks, 20 (1): 61-80, doi:10.1109/TNN.2008.2005605, ISSN 1941-0093, PMID 19068426. S2CID 206756462, which is hereby incorporated herein by reference as if set forth in full.

A message-passing neural network (MPNN) is a special class of graph neural network. An example of a message-passing neural network is described in "Neural Message Passing for Quantum Chemistry," by J. Gilmer et al., arXiv:1704.01212 [cs.LG], Apr. 2017, which is hereby incorporated herein by reference as if set forth in full. In a message-passing neural network, information between different parts of the graph neural network is propagated according to an aggregation function.

Prediction and decision tasks for power grids are often defined on a grid-induced graph. The power grid comprises buses (e.g., substations in a transmission grid) and branches (e.g., transmission lines in a transmission grid). The buses can be represented as nodes in the graph, and the branches can be represented as edges in the graph. Data that are processed for power grids are often associated with the buses, as the nodes in the graph (e.g., nodal voltages, nodal power balances, etc.), or the branches, as the edges in the graph (e.g., power flow, overload, etc.).

**SUMMARY**

Systems, methods, and non-transitory computer-readable media are disclosed for a pre-trained message-passing neural network element that enables a message-passing neural network to be scaled for a large network, such as a power grid.

In an embodiment, a method comprises using at least one hardware processor to: acquire a pre-training dataset comprising one or more batches that each includes a plurality of nodal tensors, wherein each of the plurality of nodal tensors has a nodal dimension, representing a plurality of nodes in a graph, and a feature dimension, representing a plurality of features of each of the plurality of nodes, and is labeled with one or more targets for each of the plurality of nodes; and pre-train a message-passing neural network element by minimizing a loss function, representing a difference between the one or more targets and an output of the message-passing neural network element, while, for each of the plurality of nodal tensors, for each of the plurality of features, applying an encoder of an encoder-decoder sequence to compress the nodal tensor from the nodal dimension to a latent dimension that is smaller than the nodal dimension, resulting in a latent tensor, processing the latent tensor through one or more neural network layers, and applying a decoder of the encoder-decoder sequence to decompress the processed latent tensor from the latent dimension to the nodal dimension.

The method may further comprise using the at least one hardware processor to, for each of the plurality of nodal tensors: before applying the encoder, transposing the nodal tensor from a first shape into a second shape; and after applying the decoder, transposing the nodal tensor from the second shape into the first shape.

Acquiring the pre-training dataset may comprise generating the pre-training dataset using internal iteration data, generated while solving a system of equations iteratively, to determine the one or more targets for each of the plurality of nodal tensors. The method may further comprise using the at least one hardware processor to: acquire a training dataset that is generated using a power flow solver to determine the one or more targets for each of another plurality of nodal tensors, without using internal iteration data; and after pre-training the message-passing neural network element, incorporate at least one instance of the message-passing neural network element into a message-passing neural network, and train the message-passing neural network, with the incorporated at least one instance of the message-passing neural network, using the training dataset.

The method may further comprise using the at least one hardware processor to, during the pre-training, for each of the plurality of nodal tensors, for each of the plurality of features, appending a contingency tensor to the latent tensor, wherein the contingency tensor indicates whether or not each of one or more contingencies is present. The contingency tensor may be an indicator vector, wherein the one or more contingencies are encoded in the indicator vector. The method may further comprise using the at least one hardware processor to: acquire contingency information indicating which of the one or more contingencies are applicable to the plurality of nodal tensors; apply a neural network to the contingency information to generate the contingency tensor for each of the plurality of nodal tensors, wherein the contingency tensor has a lower dimensionality than the contingency information.

The message-passing neural network element may use a multi-head attention mechanism that, for each of the plurality of nodal tensors: derives a query from the nodal tensor; derives a value and a key from an output of the encoder; and generates an attention tensor based on the query, the value, and the key, wherein the attention tensor is appended to an output of the decoder.

The message-passing neural network element may use a skip connection that, for each of the plurality of nodal tensors, appends the nodal tensor comprising the plurality of features in the feature dimension to an output of the decoder.

The graph may represent a power system. The plurality of features in the first feature dimension may comprise active power and reactive power, wherein the one or more targets and the output of the message-passing neural network both comprise one or more electrical parameters. The method may further comprise using the at least one hardware processor to: after pre-training the message-passing neural network element, train a message-passing neural network that comprises at least one instance of the message-passing neural network element using a training dataset; deploy the message-passing neural network to output the one or more electrical parameters for each of the plurality of nodes in the power system; determine power flow in electrical lines within the power system based on the one or more electrical parameters of the plurality of nodes; and adjust a configuration of the power system based on the determined power flow. The method may further comprise using the at least one hardware processor to generate the training dataset using a power flow solver to determine the one or more targets for each of another plurality of nodal tensors. Adjusting the configuration may comprise controlling an amount of power injected by at least one generator in the power system. A loss function for training the message-passing neural network may utilize a physics-based algorithm to calculate the plurality of features from the output of the message-passing neural network, and, for each nodal tensor in the training dataset, derive a loss based on a difference between the plurality of features, calculated for the nodal tensor using the physics-based algorithm, and the plurality of features in the nodal tensor.

The method may further comprise using the at least one hardware processor to, after the pre-training: replicate the message-passing neural network element to produce a plurality of message-passing neural network elements; incorporate the plurality of message-passing neural network elements into a message-passing neural network; and train the message-passing neural network, which incorporates the plurality of message-passing neural network elements, using a training dataset. The plurality of message-passing neural network elements may include at least two parallel message-passing neural network elements, wherein the message-passing neural network combines outputs of the at least two parallel message-passing neural network elements into a single output.

The loss function may utilize a physics-based algorithm to calculate the plurality of features from the output of the message-passing neural network element, and, for each of the plurality of nodal tensors, derive a loss based on a difference between the plurality of features, calculated for the nodal tensor using the physics-based algorithm, and the plurality of features in the nodal tensor.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

## BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates an example infrastructure, in which any of the processes described herein may be implemented, according to an embodiment;
FIG. 2 illustrates an example processing system, by which any of the processes described herein may be executed, according to an embodiment;
FIG. 3 illustrates an example data flow for managing a target system, according to an embodiment;
FIG. 4 illustrates a message-passing neural network, according to an example;

FIG. 5 illustrates a dense, low-dimensional, message-passing neural network (MPNN) element, according to an embodiment;

FIG. 6 illustrates a training process for a message-passing neural network, according to an embodiment;

FIG. 7 illustrates an operating process for a message-passing neural network, according to an embodiment;

FIG. 8 illustrates the incorporation of domain information into an MPNN element, according to an embodiment;

FIG. 9 illustrates a parallel plurality of domain-driven MPNN elements, according to an embodiment;

FIG. 10 illustrates a parallel plurality of domain-driven MPNN elements with a multi-head attention mechanism, according to an embodiment; and

FIG. 11 illustrates a domain-driven message-passing neural network, according to an embodiment.

## DETAILED DESCRIPTION

In an embodiment, systems, methods, and non-transitory computer-readable media are disclosed for a pre-trained message-passing neural network element that enables a message-passing neural network to be scaled for a large network, such as a power grid. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

### 1. Infrastructure

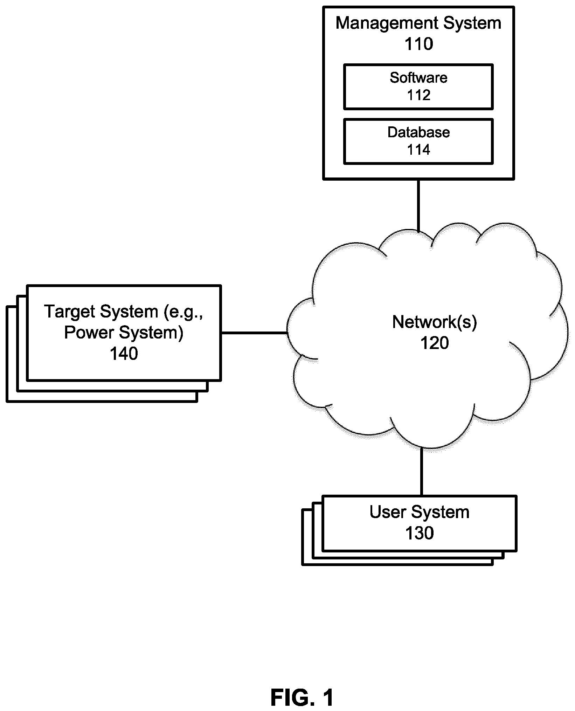

FIG. 1 illustrates an example infrastructure in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, a supervisory control and data acquisition (SCADA) system, a power management system (PMS), an energy management system (EMS), a distribution management system (DMS), an advanced DMS (ADMS), and the like. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected to one or more user systems 130 and/or target systems 140 via one or more networks 120.

Network(s) 120 may comprise the Internet, and management system 110 may communicate with user system(s) 130 and/or target system(s) 140 through the Internet using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130 and/or target systems 140 via the Internet, but may be connected to one or more other user systems 130 and/or target systems 140 via an intranet. Furthermore, while only a few user systems 130 and target systems 140, one instance of software 112, and one database 114 are illustrated, it should be understood that the infrastructure may comprise any number of user systems, power systems, software instances, and databases.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of a target system 140 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Target system 140 may comprise any type of system for which data are monitored, analyzed, and acted upon. In general, target system 140 may comprise any system that can be represented as a graph. However, in the context of specific, non-limiting examples that are provided throughout the present disclosure, it will be assumed that target system 140 comprises or consists of a power system. A power system may comprise one or more, and generally a plurality of, power resources connected in a network, which may comprise a power distribution network, a power transmission network, and/or the like. The power resources may comprise power generators, energy storage systems, loads (e.g., rechargeable energy storage system or other controllable load, non-controllable load, etc.), and/or the like. The power generators may comprise different types of power generators, such as thermal power plants (e.g., coal, natural gas, nuclear, geothermal, etc.), hydroelectric power plants, renewable resource power plants (e.g., solar, wind, geothermal, etc.), and/or the like. Each power resource may be subject to complex technical constraints and/or business constraints, such as a minimum up-time, a maximum down-time, a ramp-up and/or ramp-down rate, a modulation or stability (e.g., a power generator may not change its production level too many times or at too fast of a rate), a start-up and/or shut-down ramp rate (e.g., when starting or stopping, a power generator or load must follow a specific power curve, which may depend on how long the unit has been offline or online), and/or the like. In addition, the network, which may span a geographic region, may have complex characteristics, such as network topology, device equipment parameters, line flow limits, resource response rates, and/or the like.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL™, Oracle™, IBM™, Microsoft SQL™, Access™, PostgreSQL™, MongoDB™, and/or the like, and including cloud-based databases, proprietary databases, and unstructured databases.

2. Example Processing Device

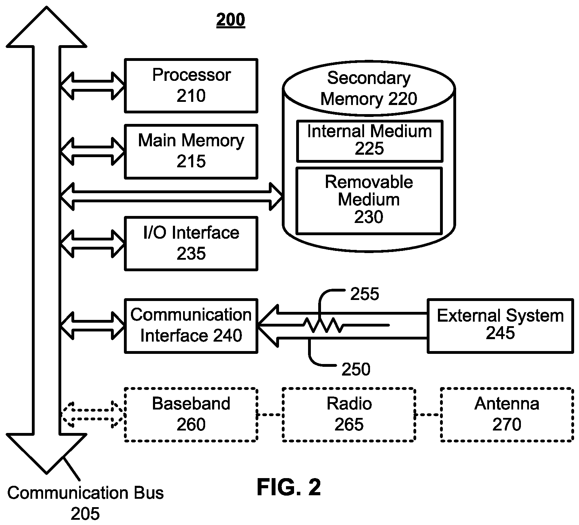

FIG. 2 is a block diagram illustrating an example wired or wireless system 200 that may be used in connection with various embodiments described herein. For example, system 200 may be used as or in conjunction with one or more of the functions, methods, or other processes (e.g., to store and/or execute software 112) described herein, and may represent components of management system 110, user system(s) 130, target system(s) 140, and/or other processing devices described herein. System 200 can be a server or any conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a processor subordinate to the main processor (e.g., back-end processor), an additional microprocessor or controller for dual or multiple processor systems, and/or a coprocessor. Such auxiliary processors may be discrete processors or may be integrated with a main processor 210. Examples of processors which may be used with system 200 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, and/or the like.

Processor 210 is preferably connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

System 200 may comprise a main memory 215. Main memory 215 provides storage of instructions and data for programs executing on processor 210, such as one or more of the processes discussed herein (e.g., embodied in software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices, networks, or other external systems 245. For example, data, which may include computer software or executable code, may be transferred to system 200 from external system 245 (e.g., a network server) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer-executable code (e.g., computer programs, such as software 112) is stored in main memory 215 and/or secondary memory 220. Computer programs can also be received via communication interface 240 and stored in main memory 215 and/or secondary memory 220. Such computer programs, when executed, enable system 200 to perform one or more of the processes described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245 (e.g., a network information server or other network device). These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

3. Example Data Flow for Target System Management

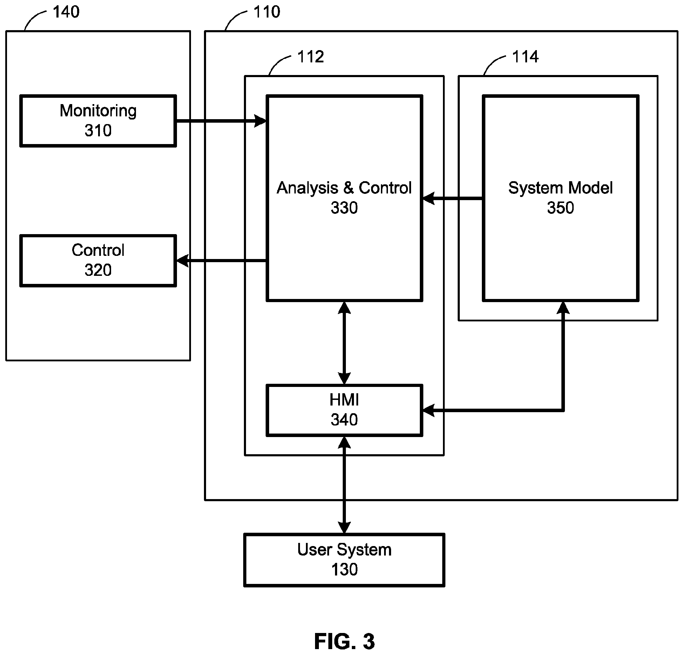

FIG. 3 illustrates an example data flow between a management system 110, a user system 130, and a target system 140, according to an embodiment. Target system 140 may comprise a monitoring module 310 and a control module 320. Software 112 of management system 110 may comprise an analysis and control module 330, and a human-to-machine interface (HMI) 340. Database 114 of management system 110 may store a system model 350. It should be understood that communications between the various systems may be performed via network(s) 120. In addition, communications between a pair of modules may be performed via an application programming interface (API) provided by one of the modules or by other inter-process communication means.

Monitoring module 310 may monitor and collect data that are output by one or more sensors in target system 140 (e.g., sensors in the network of a power system). Monitoring module 310 may also derive data from the collected data. Monitoring module 310 may transmit or "push" the collected and/or derived data as system telemetry to analysis and control module 330 (e.g., via an API of analysis and control module 330). Alternatively, analysis and control module 330 may retrieve or "pull" the system telemetry from monitoring module 310 (e.g., via an API of monitoring module 310). The system telemetry may include measurements at each of one or more nodes (e.g., buses within a power system) or other points within a network of target system 140. The system telemetry may be communicated from monitoring module 310 to analysis and control module 330 in real time, as data are collected and/or derived, or periodically. As used herein, the term "real time" includes events that occur simultaneously, as well as events that are separated in time by ordinary delays resulting from latencies in processing, memory access, communications, and/or the like.

Analysis and control module 330 receives the system telemetry from monitoring module 310, and uses the system telemetry in conjunction with system model 350 to determine a configuration for target system 140 (e.g., one or more resources in a power system), and then control target system 140 to transition to the determined configuration. In particular, analysis and control module 330 may generate control signals that are transmitted to control module 320 of target system 140. For example, the control signals may be sent via an API of control module 320. The control signals may be communicated from analysis and control module 330 of management system 110 to control module 320 of target system 140 in real time, as the system telemetry is received and analyzed, periodically (e.g., in advance of a sliding time window), or in response to a user operation. Analysis and control module 330 may control target system 140 automatically (e.g., without any user intervention), semi-automatically (e.g., requiring user approval or confirmation), and/or in response to manual user inputs.

Analysis and control module 330 may perform one or more types of analysis, such as power-flow analysis, load-flow analysis, contingency analysis and prediction, security analysis and prediction, loadability analysis and prediction, optimal power flow, Volt-Var optimization and control, dynamic security analysis (DSA) and prediction, transient security analysis (TSA) and prediction, voltage stability analysis and prediction, generation and load shedding, grid reconfiguration, grid capacity planning, outage planning, reconfiguration of protection system settings, and/or the like. These are examples of grid-aware tasks that are routinely performed in order to stably and economically operate a power grid. The analysis may be performed in response to a user operation, or automatically in real time or periodically. In some cases, the analysis may be provided to a user via human-to-machine interface 340. In other cases, analysis and control module 330 may, automatically (i.e., without user intervention) or semi-automatically (e.g., with user approval or confirmation), initiate a control operation based on the analysis. Initiation of the control operation may comprise transmitting control commands to control module 320 of target system 140, which may responsively control target system 140 according to the control commands.

Control module 320 of target system 140 receives the control signals from analysis and control module 330, and controls one or more components of target system 140 in accordance with the control signals. Examples of such control include, in the context of a power system, setting a setpoint (e.g., active and/or reactive power for power generators, voltage, etc.), adjusting the power output of a power generator, adjusting the charging or discharging of an energy storage system, adjusting the power input to a load, closing or opening a switch (e.g., circuit breaker), and/or the like.

Human-to-machine interface 340 may generate a graphical user interface that is transmitted to user system 130 and receive inputs to the graphical user interface via user system 130. The graphical user interface may provide information regarding the current state of target system 140 determined from the system telemetry, a predicted state of target system 140 determined by analysis and control module 330, a configuration of target system 140 determined by analysis and control module 330, a control decision or recommendation for target system 140 determined by analysis and control module 330, a visual representation of system model 350, and/or the like. In addition, the graphical user interface may provide inputs that enable a user of user system 130 to configure settings of analysis and control module 330, configure system model 350, specify or approve controls to be transmitted to control module 320 of target system 140, analyze target system 140, and/or the like.

System model 350 may be stored in database 114 and accessed by modules, such as analysis and control module 330, via any known means (e.g., via an API of database 114, a direct query of database 114, etc.). Database 114 may store a system model 350 for each target system 140 that is managed by management system 110. Each system model 350 may model target system 140 in any suitable manner. For example, system model 350 may comprise a single-line diagram representing the components of the network and their relationships to each other, a system of equations, an adjacency matrix, and/or the like. It should be understood that system model 350 may be implemented as a data structure that is capable of being automatically analyzed by software modules, including analysis and control module 330.

4. Introduction

Conventionally, grid-aware tasks are accomplished using a mathematical model of the power grid. For power flow analysis, the mathematical model comprises static equations. For transient stability analysis, the mathematical model comprises systems of dynamic differential or differential algebraic equations (DAE). The mathematical model is then used in an evaluation, simulation, and/or optimization process, which generally represents the core step in accomplishing the task.

Machine learning can be used to replace, complement, or assist the conventional processes for accomplishing these grid-aware tasks. The use of machine learning offers potential benefits, such as a reduction in computational time and an increase in robustness. In particular, approaches that are based on or assisted by machine learning are generally faster, because their inference is less computationally expensive than equation solving, numerical integration, and optimization, and they can easily scale to state-of-the-art parallel hardware, such as GPUs. In addition, complementing conventional processes with machine learning may mitigate the numerical instabilities of conventional processes.

"Recent Developments in Machine Learning for Energy Systems Reliability Management," by L. Duchesne et al., in Proceedings of the IEEE, vol. 108, no. 9, pp. 1656-1676, Sep. 2020, doi: 10.1109/JPROC.2020.2988715, which is hereby incorporated herein by reference as if set forth in full, provides an overview of the use of machine learning for grid-aware tasks. Specifically, machine learning can be applied to grid-aware tasks in at least the following use cases:

- Simulation and/or Optimization: A machine-learning model may be trained to predict the result of a simulation or optimization, based on training data that may be generated through offline simulation or optimization. The trained machine-learning model may be deployed and operated as a replacement of the conventional process for simulation or optimization.

- Partial Decision-Making: A trained machine-learning model may be used to suggest operational decisions or predictions. These suggestions may be fully implemented, partially implemented, or ignored, based on one or more criteria. For example, the machine-learning model's suggestion may be used when the confidence of the suggestion satisfies (e.g., is equal to or greater than) a threshold, and the conventional or other alternative process may be used when the confidence of the machine-learning model's suggestion does not satisfy (e.g., is less than) the threshold.

- Prescreening: A trained machine-learning model may be used to produce operational decisions or predictions for a plurality of operating scenarios (e.g., contingencies). The output of the machine-learning model may be used for zero, one, or more of the operating scenarios based on one or more criteria. For example, the machine-learning model's output may be used for operating scenarios in which the confidence of the output satisfies a threshold, and the conventional or other alternative process may be used for operating scenarios in which the confidence of the output does not satisfy the threshold.

- Warm-Starting: A trained machine-learning model may be used to produce a warm start (e.g., initial starting solution) for the conventional or other alternative process, such as a Newton-Raphson (NR) algorithm, which starts with the warm start as a starting solution and iteratively processes a system of equations to a final solution. The aim of the machine-learning model is to increase the computational efficiency and/or robustness of the combined process over the conventional process.

- What-If Analysis: A trained machine-learning model is used to execute a what-if analysis that may go beyond the scenarios processed by the conventional process. For example, the machine-learning model may be a generative model that proposes additional critical scenarios to analyze in an N-1 security assessment.

- Operator Support: A trained machine-learning model may propose an action to a human operator, together with an analysis of the impact of the proposed action and one or more alternative actions. The human operator can then use this information to decide what action to take.

Disclosed embodiments may be used to define deep-learning architectures that are appropriate for any of the above use cases and/or related use cases. The resulting machine-learning models may be used for planning and/or operations in any such use case.

For ease of understanding, disclosed embodiments will be described primarily in the context of static power-flow and contingency analysis. In this context, the goal is to predict the solution of a power-flow problem, given nodal power balances in terms of active and reactive power and potentially a list of contingencies (e.g., branches that are out of operation). The predicted solution may comprise nodal voltages (e.g., voltage magnitudes and angles), from which the power flows along the branches between nodes can be calculated. However, it should be understood that the disclosed embodiments are not limited to this context. Rather, disclosed embodiments can be applied to any decision or prediction task that may benefit from machine learning.

In addition, while target system 140 is primarily exemplified herein as a power system, such as a power grid (e.g., a transmission grid, distribution grid, microgrid, etc.), it should be understood that target system 140 may be any system that can be represented as a graph with nodes and edges. For example, target system 140 may comprise a network of connected components. In a power system, these components represent resources connected by electrical lines. In a gas pipeline, the components may represent equipment (e.g., gas compressors, pumps, storage tanks, etc.) connected by gas pipes. In a computing system, these components may represent computational resources connected by communication paths. In a geographic system, these components may represent locations connected by roads. It should be understood that these are just several examples. Any network can be converted into a graph that comprises the components as nodes and the connections between the components as edges.

## 5. Message-Passing Neural Network

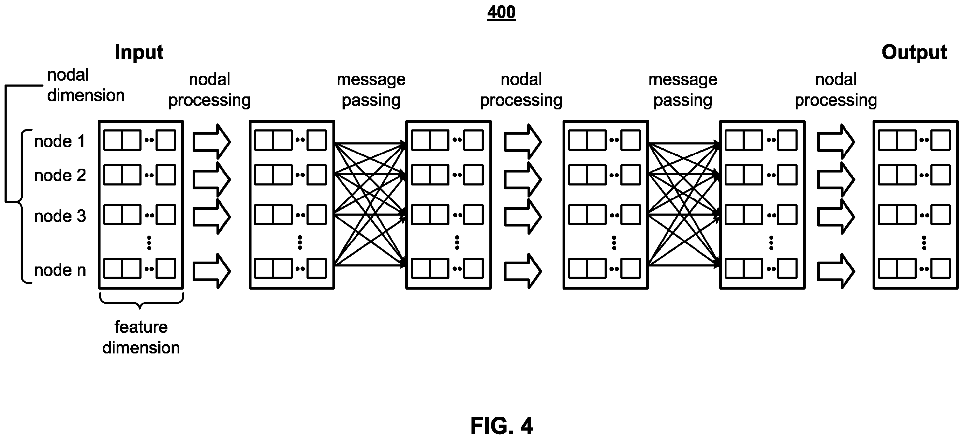

FIG. 4 illustrates a typical message-passing neural network (MPNN) 400, according to an example. The input to message-passing neural network 400 comprises a nodal tensor that has a nodal dimension, representing a plurality of nodes in the graph, and a feature dimension, representing one or more, and generally a plurality of, features of each of the plurality of nodes. In other words, each node in the nodal dimension may be represented by a vector of one or more features in the feature dimension. During training, a training dataset, comprising a plurality of nodal tensors, may be input to message-passing neural network 400 in one or more batches. In the case of supervised learning, each of the plurality of nodal tensors is labeled with one or more targets for each of the plurality of nodes.

The input to message-passing neural network 400 may also comprise an adjacency matrix, representing the adjacencies of the plurality of nodes in the graph. The adjacency matrix provides awareness of the network topology to message-passing neural network 400. The adjacency matrix may comprise a value for every possible pairing of the plurality of nodes. A value of zero represents that no edge exists between the corresponding pair of nodes, whereas a value other than zero (e.g., a value of one in an unweighted adjacency matrix) represents that an edge exists between the corresponding pair of nodes. In an embodiment, the adjacency matrix is weighted. For example, in the context of power-flow analysis, the adjacency matrix may be weighted such that each edge is represented by the admittance or impedance value on the electrical line between the corresponding pair of nodes.

Within message-passing neural network 400, a nodal tensor is processed through one or more sequences of nodal processing (i.e., node-level) and messaging passing (i.e., edge-level). The nodal process processes the data for each node, without sharing the data with other nodes. Typically, the same nodal processing is applied, regardless of the node. The default approach to nodal processing is a feed-forward network that is fully connected along the last dimension of the nodal tensor. For example, if the input tensor $x$ has a shape of $N \times n_{node} \times n_{input}$, in which $N$ is the batch size, $n_{node}$ is the number of nodes (i.e., the nodal dimension), and $n_{input}$ is the number of input features (i.e., the feature dimension), a fully connected network (FCN) would produce an output tensor $y$ having a shape of $N \times n_{node} \times n_{output}$, in which $n_{output}$ is the number of output features. Since no information is shared across the nodes or batch samples, $y(i,j) = f(x(i,j)|\theta)$ for each nodal tensor $i$ and each node $j$, where $\theta$ is the vector of weights of the fully connected network. A fully connected network is usually implemented through sequences of multiplication of the input tensor with a matrix, parameterized by the weights $\theta$, followed by a non-linear mapping, such as the rectified linear unit (ReLU) activation function, in which the final operation is typically a matrix multiplication. Other known elements, such as pooling operations, normalization operations, and/or the like, may also be used in the nodal processing.

Via message passing, information between the different parts of the neural network is propagated by iteratively updating a representation of each node based on an aggregation function that aggregates information from the node and nearby nodes. A typical aggregation function may utilize mean aggregation. During message passing, the data for each node in the hidden layer are shared with any adjacent nodes. Each node updates its data in the hidden layer based on the aggregation function, which may aggregate the data shared by adjacent nodes and the node's own data. While only message-passing sequences are illustrated, it should be understood that message-passing neural network 400 may comprise any number of message-passing sequences.

The complexity of naive, fully connected information propagation scales quadratically with the number of nodes. In addition, artificial neural networks are known to be poor learners when the dimensionality of the tensors is too high. Thus, disclosed embodiments may impact the message passing within message-passing neural network 400 to overcome these challenges, so as to enable the number of nodes to be scaled up.

Message-passing neural network 400 is especially suitable for making power-flow predictions for an electrical network of a power system. In this context, the input features in the nodal tensor may comprise active power and reactive power for each of the plurality of nodes in the graph, and the targets and output features of message-passing neural network 400 may comprise electrical parameters, such as voltage magnitude and voltage angle, for each of the plurality of nodes in the graph. For example, the input features and the targets/output features of message-passing neural network 400 may be:

Input Features

| Feature Name | Encoding Type (if any) | Dimensions |
|---|---|---|
| Active power demand | N/A | $\|\mathcal{N}\| \times 1$ |
| Reactive power demand | N/A | $\|\mathcal{N}\| \times 1$ |
| Node type (PV, PQ, slack) | One-hot encoded | $\|\mathcal{N}\| \times 3$ |
| PV reference voltage magnitude | $V^{Magnitude}$ for PV nodes, 0 for others | $\|\mathcal{N}\| \times 1$ |
| Slack reference voltage magnitude | $V^{Magnitude}$ for slack nodes, 0 for others | $\|\mathcal{N}\| \times 1$ |
| Slack reference voltage angle | $V^{Angle}$ for slack nodes, 0 for others | $\|\mathcal{N}\| \times 1$ |

Targets/Output Features

| Feature Name | Encoding Type (if any) | Dimensions |
|---|---|---|
| Voltage magnitude | N/A | $\|\mathcal{N}\| \times 1$ |
| Voltage angle | $\sin(V^{Angle})$ | $\|\mathcal{N}\| \times 1$ |
| Voltage angle | $\cos(V^{Angle})$ | $\|\mathcal{N}\| \times 1$ |

In the above input features, the node type may be one of a PV node, a PQ node, or a slack node, which may be encoded in an indicator vector. A PV node is a bus that has a power generator which is regulating the terminal voltage to a voltage setpoint. Thus, a PV node will have a PV reference voltage magnitude ($V^{Magnitude}$) equal to the voltage setpoint. A PQ node is a bus that has no voltage control devices (e.g., no power generators) and is not remotely controlled by a voltage control device. A slack node is a bus in an electrical island with a fixed voltage magnitude and a fixed voltage angle. Thus, a slack node will have a slack reference voltage magnitude ($V^{Magnitude}$) equal to the fixed voltage magnitude and a slack reference voltage angle ($V^{Angle}$) equal to the fixed voltage angle. Although not shown, in an embodiment that utilizes contingency information, as described elsewhere herein, the input features may also comprise the number of adjacent edges subject to contingency, and, in the context of power-flow or contingency analysis, the total absolute bus admittance lost due to adjacent contingencies.

In the above outputs, the sine and cosine values of the voltage angle ($V^{Angle}$) are output, instead of the voltage angle ($V^{Angle}$) itself. This enables quadrant behaviors of the voltage angle ($V^{Angle}$) to be captured.

It should be understood that the above input and output features are simply examples applicable to power-flow or contingency analysis. In other contexts, the input and output features will differ. For example, other possible output features in the context of a power system include, without limitation, whether or not a generator angle remains stable or goes out of step after a contingency, key performance indicators (KPIs) (e.g., grid frequency KPIs, such as rate of change of frequency (ROCOF), frequency nadir, etc.), and/or the like.

6. <u>Dense Low-Dimensional Message Passing</u>

Naive message passing, which is typically based on a fixed graph and propagates information from any node to any node within the graph, has quadratic complexity, and therefore, does not scale well for large numbers of nodes (e.g., ten-thousand or more nodes). Empirical investigations demonstrate that naive message passing, using the sparse message-passing propagation in a typical power-grid graph, is not favorable for power-flow prediction. These empirical observations are supported by theoretical considerations. In particular, the physics of power flow imply that a local change (e.g., an increase in power generation at a bus) has an impact on the entire grid. However, naive sparse message passing only has local impact, and therefore, requires many iterations for propagation across the entire grid. Accordingly, in an embodiment, dense low-dimensional message passing is incorporated into a message-passing neural network. This enables an increase in the number of propagation iterations, relative to naive message passing.

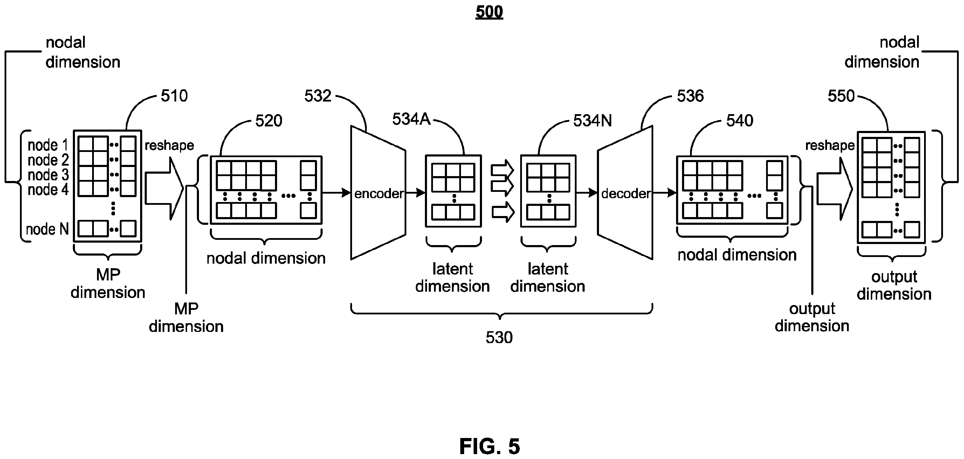

FIG. 5 illustrates a dense, low-dimensional, MPNN element 500, according to an embodiment. It should be understood that MPNN element 500 may be a component within a larger message-passing neural network. For example, one or more, and potentially all, of the sequences of nodal processing and message passing in message-passing neural network 400 may be replaced with MPNN element 500.

The input to MPNN element 500 is an input nodal tensor 510 having a nodal dimension and a message-passing (MP) dimension. It is contemplated that the message-passing dimension would generally be the feature dimension. However, it should be understood that input nodal tensor 510 may have already passed through one or more neural network layers of an overarching message-passing neural network before reaching MPNN element 500. Thus, the message-passing dimension may be a hyperparameter (e.g., in the range of sixteen to sixty-four) that is different than the original feature dimension. Alternatively, input nodal tensor 510 could be the input of the overarching message-passing neural network, in which case the message-passing dimension will be the feature dimension.

Input nodal tensor 510 may be reshaped into reshaped nodal tensor 520. In an embodiment, this reshaping comprises transposing (i.e., $x^T$) input nodal tensor 510. This transposition flips the dimensions of the nodal tensor from *nodal dimension* × *message-passing dimension* to *message-passing dimension* × *nodal dimension.*

Reshaped nodal tensor 520 is input to an encoder 532 of an encoder-decoder sequence 530. Encoder 532 compresses the nodal dimension of nodal tensor 520 to a latent dimension to produce an initial latent tensor 534A. Thus, latent tensor 534 may have a shape of *message-passing dimension* × *latent dimension*. It should be understood that the latent dimension is smaller than the nodal dimension. The compression from the nodal dimension to the latent dimension may filter out information that is irrelevant to message passing.

Encoder 532 may be a separate neural network from the overarching message-passing neural network. Essentially, encoder 532 may be a mapping that maps each nodal-dimensional vector in the message-passing dimension to a latent-dimensional vector. In this case, encoder 532 may be a linear orthogonal mapping. Orthogonality may be achieved during training by penalizing non-orthogonality.

The use of encoder 532 ensures that the number of trainable weights scales with an increase in the number of nodes. In particular, the number of trainable weights in encoder 532 may be approximately *nodal dimension* × *latent dimension.*

Latent tensor 534 may be processed through one or more, and generally a plurality of, neural network layers, according to the sequence of nodal processing and message passing described elsewhere herein, but in the latent dimension. The nodal processing may be fully connected, as described elsewhere herein. In each sequence, latent tensor 534 is updated, such that, over one or more sequences, an initial latent tensor 534A will result in a final latent tensor 534N. In an embodiment, each sequence may be identical via weight sharing (e.g., using identical weight vectors). The fully connected network within encoder-decoder sequence 530 may be implemented through sequences of matrix multiplications, non-linear mappings (e.g., ReLU activation function), and/or other applicable deep-learning elements.

Final latent tensor 534N is input to a decoder 536 of encoder-decoder sequence 530. Decoder 536 decompresses the latent dimension back to the nodal dimension. Thus, the output of decoder 536 will be a nodal tensor 540, having the shape of *output dimension* × *nodal dimension*. Decoder 536 may be the reverse or transpose of encoder 532. Thus, decoder 536 may also be a neural network, potentially including a linear orthogonal mapping.

Alternatively or additionally, decoder 536 may convert the input feature(s) in nodal tensor 520 into output feature(s) in nodal tensor 540. In this case, the output dimension may differ from the message-passing dimension. However, it should be understood that, when the number of input features and output features is the same, the message-passing and output dimensions will be the same. In an alternative embodiment, decoder 536 may perform no conversion on the features, such that nodal tensor 540 comprises processed values of the input feature(s) in the message-passing dimension.

Encoder-decoder sequence 530 may be applied to each of a plurality of input features in reshaped nodal tensor 520. For example, the sequence(s) of nodal processing and messaging passing may be applied to individual vectors having the message-passing dimension of reshaped nodal tensor 520. Each vector may have a shape of *message-passing dimension* × 1. In other words, the message passing for each feature in the nodal tensor is performed within encoder-decoder sequence 530.

Nodal tensor 540, output by decoder 536, which is also the output of encoder-decoder sequence 530, can be reshaped into output nodal tensor 550. This reshaping may be the reverse of the reshaping done to input nodal tensor 510.

For example, the reshaping may comprise transposition of nodal tensor 540. In any case, output nodal tensor 550 has a shape of *nodal dimension × message- passing dimension.* Output nodal tensor 550 may be provided to one or more other neural network layers of the overarching message-passing neural network, to produce a final output of the overarching message-passing neural network. Alternatively, output nodal tensor 550 could be the final output of the overarching message-passing neural network.

Notably, the latent dimension may be much smaller than the nodal dimension. Thus, the message passing within encoder-decoder sequence 530 is much less computationally expensive than naive message passing. In particular, by decompressing the nodal dimension, MPNN element 500 can scale for any number of nodes. In other words, dense, low-dimensional, MPNN element 500 enables the message-passing neural network to be scaled for any size of graph.

In an embodiment, the input features, represented in nodal tensor 520, and/or the output features, represented in nodal tensor 540, may have values that are complex numbers. However, artificial neural networks, including message-passing neural networks, generally work with only real numbers. Thus, in an embodiment, to represent both the real and imaginary components of each complex number, the nodal dimension in at least nodal tensors 520 and 540 may be reshaped to twice the number of nodes (i.e., representing one real value and one imaginary value for each feature value for each node). In other words, each feature vector in the message-passing dimension and the output dimension may comprise both the real and imaginary components of each feature value. In this case, encoder-decoder sequence 530 operates on these feature vectors to compress the nodal dimension of $2 \times$ *number of nodes* into the latent dimension.

## 7. Training

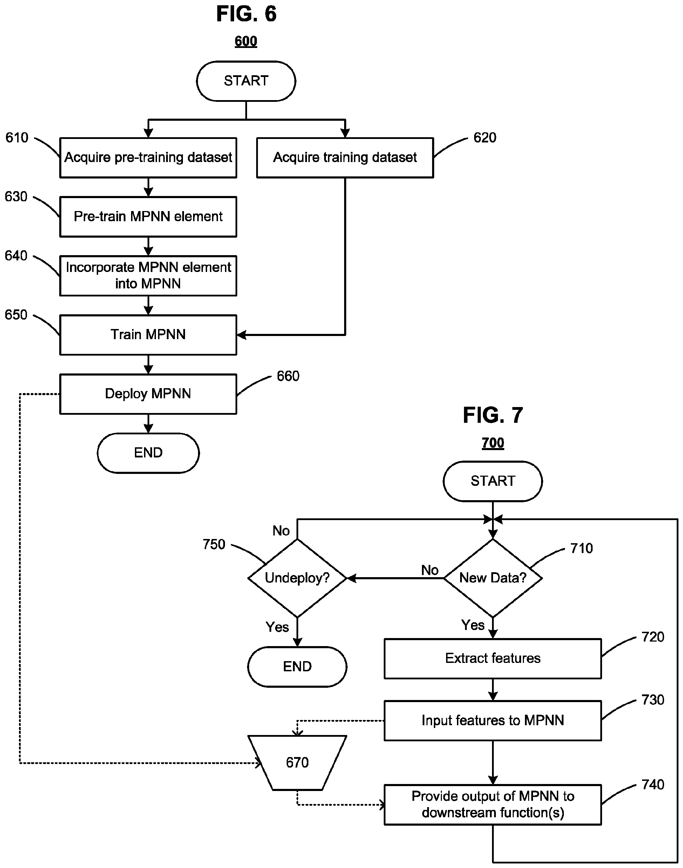

FIG. 6 illustrates a training process 600, which trains a message-passing neural network in a training phase, according to an embodiment. Training process 600 may be implemented by software 112. While training process 600 is illustrated with a certain arrangement and ordering of subprocesses, training process 600 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

In subprocess 610, a pre-training dataset is acquired, and in subprocess 620, a training dataset is acquired. The pre-training dataset and the training dataset may be acquired in the same manner. For example, the pre-training dataset may be extracted from the training dataset. Alternatively, the pre-training dataset and the training dataset may be acquired in different manners, as discussed in greater detail below.

Each of the pre-training dataset and the training dataset may comprise a plurality of records. Each of the plurality of records may comprise one or more input features, labeled with one or more targets. In particular, each of the plurality of records may comprise a nodal tensor that includes one or more input features for each of a plurality of nodes in a graph. In addition, for each of the plurality of records, an adjacency matrix may be generated. The adjacency matrix represents a plurality of edges between the plurality of nodes in the nodal tensor. In the context of a power system, the graph represents the power system, each of the plurality of nodes represents a bus in the power system, and each of the plurality of edges represents an electrical connection between a pair of buses. In the context of power-flow analysis, the one or more features may comprise nodal active power demand, nodal reactive power demand, node type, voltage magnitude setpoint, voltage angle setpoint, and/or the like. The one or more targets may comprise voltage magnitude, voltage angle, and/or the like.

In an embodiment, the pre-training dataset is acquired in subprocess 610 by generating (e.g., via simulation) and/or collecting (e.g., from historical data) a relevant dataset for a target system 140. The relevant dataset may comprise a plurality of data samples that each represent various operating conditions for each of a plurality of nodes in target system 140. For instance, in the context of power-flow or contingency analysis, each data sample may comprise a power balance (e.g., active and reactive power) at each node, as well as represent any contingencies or other variations in operating conditions (e.g., impacting an admittance matrix).

Once the relevant dataset has been acquired, each of the data samples may be solved through a conventional process, such as the Newton-Raphson method or any other method that solves a system of equations iteratively. During this solving, iteration data may be collected. In the context of power-flow or contingency analysis, the Newton-Raphson method iteratively solves a linear equation $\Delta(|v|, \angle v)^i_{bus} = Y_{bus} * \Delta(p, q)^i_{bus}$, in which $\Delta(|v|, \angle v)^i_{bus}$ is the step on the nodal voltages that is taken in iteration *i*, $Y_{bus}$ is the admittance matrix for the buses, and $\Delta(p, q)^i_{bus}$ is the nodal power balance residual of iteration *i*. Thus, the iteration data may comprise, for each iteration, the nodal power balance residual of the iteration, the step on the nodal voltages that is taken in the iteration, and/or the like. Similar iteration data may be collected from alternative iterative methods. For example, similar iteration data may be collected using dynamic simulation of target system 140, which also comprises dedicated information-passing mechanisms between nodes. As with the Newton-Raphson method, the information passing in dynamic simulation is often determined by solving a sparse linear system. Notably, the iterations represent the propagation of nodal information in a specific manner, and therefore, can help pre-train MPNN element 500 to propagate nodal information in the specific manner. Regardless of how the iteration data is collected, each data sample may be combined with the associated iteration data into a labeled nodal tensor in the pre-training dataset.

In an embodiment, the training dataset is acquired in subprocess 620 by generating and/or collecting a relevant dataset for a target system 140. This relevant dataset may be essentially the same as the relevant dataset used for the pre-training dataset, but comprise different data samples. Alternatively, this relevant dataset may comprise the same data samples as the relevant dataset used for the pre-training dataset.

Once the relevant dataset has been acquired, each of the data samples may be solved through a conventional process, such as the Newton-Raphson method or other iterative or non-iterative method. For example, in the context of power-flow analysis, the training dataset may be generated using a power-flow solver to determine the target(s) for each of the data samples. Each of the data samples may be converted into a nodal tensor that is labeled with the target(s) determined for that data sample, to generate the training dataset of a plurality of labeled nodal tensors. In an embodiment, in contrast to the pre-training dataset acquired in subprocess 610, the training dataset acquired in subprocess 620 does not incorporate the iteration data.

In subprocess 630, MPNN element 500 is pre-trained using the pre-training dataset acquired in subprocess 610. As used herein, the term "pre-train" refers to training MPNN element 500 before training the message-passing neural network as a whole. MPNN element 500 may be pre-trained by minimizing a loss function, representing a difference between the target(s) and the output of MPNN element 500. In particular, over one or more batches in one or more epochs, for each of the plurality of nodal tensors in the pre-training dataset, for each of the plurality of features in the nodal tensor, encoder 532 is applied to the nodal tensor to compress the nodal tensor from the nodal dimension to the latent dimension, resulting in a latent tensor, the latent tensor is processed through one or more, and generally a plurality of, neural network layers, and decoder 536 is applied to final latent tensor 534N to decompress final latent tensor 534N from the latent dimension back to the nodal dimension. The loss function may compare the direct output or a post-processed output of decoder 536 to the target(s) with which the nodal tensor was labeled, in order to calculate the loss. One or more parameters (e.g., weights) in MPNN element 500 may then be updated based on the calculated loss, before processing the next nodal tensor in the pre-training dataset. Notably, by training MPNN element 500 using the pre-training dataset, which may comprise the iteration data from the iterative method (e.g., Newton-Raphson method, dynamic simulation, etc.), MPNN element 500 learns to imitate the manner in which information is propagated by iterations of the iterative method.

In subprocess 640, one or more instances of pre-trained MPNN element 500 may be incorporated into an overarching message-passing neural network, as the message-passing mechanism within the message-passing neural network. A single instance of pre-trained MPNN element 500 may be incorporated into the message-passing neural network, or a plurality of instances of pre-trained MPNN element 500 may be incorporated into the message-passing neural network. Pre-trained MPNN element 500 may be replicated to produce the plurality of instances of pre-trained MPNN element 500. In an embodiment that is described in more detail elsewhere herein, a plurality of instances of MPNN element 500 are incorporated in parallel into the message-passing neural network, such that each MPNN element 500 operates in parallel to produce an output (e.g., nodal tensor 540 or 550). The outputs of the parallel plurality of MPNN elements 500 are then combined, according to an aggregation function, into a single output.

In subprocess 650, the message-passing neural network, comprising at least one instance of pre-trained MPNN element(s) 500, is trained using the training dataset acquired in subprocess 620. The message-passing neural network may be trained by minimizing a loss function, representing a difference between the target(s) and the output of the message-passing neural network. In particular, over one or more batches in one or more epochs, for each of the plurality of nodal tensors in the training dataset, the message-passing neural network is applied to the nodal tensor to produce an output. The loss function may compare the direct output or a post-processed output of the message-passing neural network to the target(s) with which the nodal tensor was labeled, in order to calculate the loss. One or more parameters (e.g., weights) in the message-passing neural network may then be updated based on the calculated loss, before processing the next nodal tensor in the training dataset.

Subprocess 660 may also comprise evaluating the trained message-passing neural network, based on one or more metrics. The metric(s) may comprise accuracy, efficiency, and/or the like. When the metric(s) indicate that the trained message-passing neural network is not sufficient (e.g., the metric(s) do not satisfy one or more thresholds), the message-passing neural network may be retrained. This evaluation and retraining may occur over one or more iterations until the message-passing neural network is deemed sufficient, at which point, training process 600 proceeds to subprocess 660.

In subprocess 660, the trained and sufficient message-passing neural network is deployed. For instance, the message-passing neural network may be deployed from a training or development environment to an operating or production environment as deployed message-passing neural network 670. As an example, message-passing neural network 670 may be deployed with an application programming interface that is accessible to other services on management system 110 (e.g., in a microservices architecture), such as analysis and control module 330. Alternatively, message-passing neural network 670 may be integrated into analysis and control module 330 or stored in database 114 (e.g., as or in association with system model 350).

The loss function utilized in subprocess 630 to pre-train MPNN element 500 may be the same as or different from the loss function utilized in subprocess 650 to train the message-passing neural network. A typical loss function may utilize mean squared error (MSE), root mean squared error (RMSE), mean absolute error (MAE), or the like. However, in an embodiment, either or both of these loss functions may utilize or otherwise be informed by a physics-based algorithm. For example, the physics-based algorithm may calculate the input feature(s) from the output of MPNN element 500 or the message-passing neural network, and, for each nodal tensor in the respective pre-training or training dataset, derive a loss based on a difference between the input feature(s), calculated for the nodal tensor using the physics-based algorithm, and the input feature(s) in the nodal tensor. In the context of power-flow analysis, the physics-based algorithm may solve a system of power-flow equations to calculate the power balances (e.g., active and reactive power) from voltages (e.g., voltage magnitude and voltage angle) output by MPNN element 500 or the message-passing neural network. Empirically, a physics-informed loss function improves the trainability of the message-passing neural network.

8. Operation

FIG. 7 illustrates an operating process 700, which utilizes deployed message-passing neural network 670 in an operating phase, according to an embodiment. Operating process 700 may be implemented by software 112. While operating process 700 is illustrated with a certain arrangement and ordering of subprocesses, operating process 700 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

It should be understood that deployed message-passing neural network 670 is the same as the message-passing neural network that was trained during training process 600. However, during the operating phase, a loss function will no longer be utilized to train the message-passing neural network.

In subprocess 710, it is determined whether or not new data are received. For example, new data may be received in system telemetry from monitoring module 310 of target system 140. This data may be received continuously (e.g., in real time), periodically, in response to an event (e.g., user operation or other trigger), and/or the like. When new data are received (i.e., "Yes" in subprocess 710, operating process 700 proceeds to subprocess 720. Otherwise, when new data are not received (i.e., "No" in subprocess 710), operating process 700 proceeds to subprocess 750.

In subprocess 720, one or more, and generally a plurality of, features are extracted from the data. It should be understood that these are operational values of the same input feature(s) that were included for each of the plurality of nodes in the plurality of records in the pre-training dataset and training dataset, acquired in subprocesses 610 and 620, respectively.

In subprocess 730, the feature(s), extracted in subprocess 720, are input to message-passing neural network 670, as deployed in subprocess 660 of training process 600. In particular, deployed message-passing neural network 670 processes the feature(s) to produce an output. In the context of a power system, the output may comprise one or more electrical parameters for each of the plurality of nodes in the graph of the power system. In the context of power-flow analysis, the electrical parameters may comprise the voltage magnitude and voltage angle.

In subprocess 740, the output of deployed message-passing neural network 670 may be provided to one or more downstream functions. A downstream function is any function that may utilize the output of deployed message-passing neural network 670 for target system 140. For example, analysis and control module 330 may utilize the output to produce one or more control signals that are transmitted to control module 320 to control one or more components of target system 140, for example, to adjust an operating configuration of target system 140.

In the context of power-flow analysis, analysis and control module 330 may determine power flow in the electrical lines (i.e., edges of the graph) of the power system based on the voltage magnitude and voltage angle or other electrical parameters of the plurality of buses (i.e., nodes of the graph). Then, analysis and control module 330 may adjust a configuration of the power system based on the determined power flow. Adjusting the configuration of the power system may comprise controlling an amount of power injected by at least one generator (e.g., at a bus) in the power system, adjusting an amount of power supplied to a load in the power system, adjusting a voltage setpoint (e.g., on a voltage-controlling device) in the power system (e.g., to perform voltage regulation, reactive power compensation, etc.), adjusting a load in the power system (e.g., load-shedding), dispatching power generation to reduce network congestion, and/or the like.

In subprocess 750, it is determined whether or not deployed message-passing neural network 670 is to be un-deployed. For example, un-deployment may be performed in response to a user operation via human-to-machine interface 340. When determining to un-deploy message-passing neural network 670 (i.e., "Yes" in subprocess 750), operating process 700 may end. Otherwise, when determining not to un-deploy message-passing neural network 670 (i.e., "No" in subprocess 750), operating process 700 may return to subprocess 710.

9. Domain-Driven Pre-Training

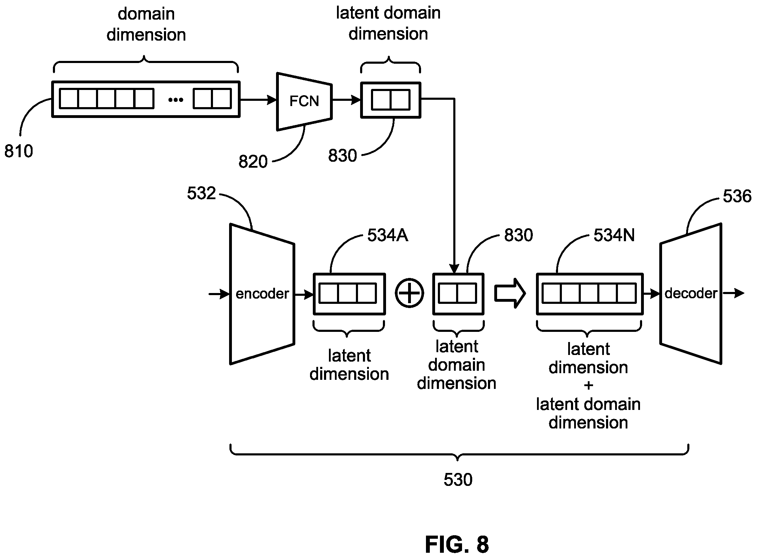

In embodiment, the pre-training of MPNN element 500 in subprocess 630 may be domain-driven. FIG. 8 illustrates the incorporation of domain information 810 during pre-training of encoder-decoder sequence 530 of MPNN element 500, according to an embodiment. In a primary embodiment, domain information 810 comprises or consists of contingency information. Contingency information may modify the network topology. The use of contingency information during pre-training may enable the pre-trained MPNN element 500 to adapt to various contingency scenarios. However, it should be understood that domain information 810 may comprise or consist of other types of information related to the domain for which the deployed message-passing neural network 670 will operate.

In an embodiment in which domain information 810 comprises contingency information, the contingency information may be represented as an indicator vector. For example, assume that target system 140 has C possible contingencies that are to be considered. The indicator vector may be a binary vector of length C, in which a value of 0 represents a normal state (e.g., normal operation) and a value of 1 represents a contingency state (e.g., failure or other abnormal operation). In other words, a value of 1 in the c-th position in the indicator vector represents that the c-th asset is in a contingency state. In the context of a power system, the C possible contingencies may equal the number of branches in the network (i.e., edges in the graph), and represent whether or not each branch has failed.

In an embodiment, a neural network 820, which may be a fully connected network, may be applied to domain information 810 (e.g., an indicator vector) in a domain dimension to produce a latent domain tensor 830 in a latent domain dimension. Latent domain tensor 820 may also comprise or consist of an indicator vector. In other words, neural network 820 may compress domain information 810 from a domain dimension to a latent domain dimension. It should be understood that the latent domain dimension is smaller than the domain dimension. Thus, domain information 810 may have a shape of 1 × *domain dimension* and latent domain tensor 830 may have a shape of 1 × *latent domain dimension.* Latent domain tensor 830 may also be referred to herein as a "contingency tensor," when used to represent contingency information.

It should be understood that each nodal tensor in the pre-training dataset may be associated with respective domain information 810. Thus, when MPNN element 500 is being pre-trained on a particular nodal tensor from the pre-training dataset, the associated domain information 810 may be processed through neural network 820 to produce latent domain tensor 830. This latent domain tensor 830 is then appended to or otherwise incorporated into the initial latent tensor 534A that was produced by encoder 532 for the associated nodal tensor, resulting in a latent tensor with an overall latent dimension equal to *latent dimension + latent domain dimension.* Thus, compressed domain information 810 (e.g., contingency information) is incorporated into the nodal processing and message passing of encoder-decoder sequence 530.

Similarly, during operating process 700, each nodal tensor that is input to deployed message-passing neural network 670 may be associated with domain information 810. This associated domain information 810 will be processed through neural network 820 to produce latent domain tensor 820, which is incorporated into the initial latent tensor 534 that was produced by encoder 532 for the associated nodal tensor. The combined latent tensor will be processed and decompressed via decoder 536 to produce an output nodal tensor that accounts for the associated domain information 810 (e.g., contingency information).

10. Parallelization

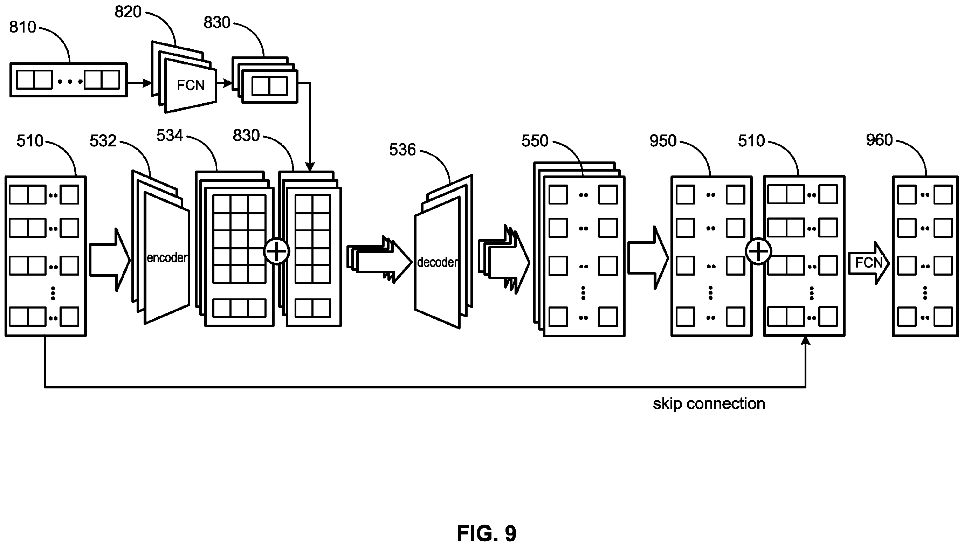

FIG. 9 illustrates a parallel plurality of domain-driven MPNN elements 500, according to an embodiment. In the illustrated embodiment, there are three parallel MPNN elements 500. However, it should be understood that a message-passing neural network (e.g., deployed message-passing neural network 670) may comprise any number of MPNN elements 500, including one, two, three, four, five, or more. For simplicity, intermediate nodal tensors 520 and 540 are omitted.

These parallel MPNN elements 500 may be incorporated into a message-passing neural network in subprocess 640 of training process 600. The message-passing neural network, with the parallel MPNN elements 500, is then trained in subprocess 650 and deployed in subprocess 660, such that deployed message-passing neural network 670 will include the parallel MPNN elements 500. In other words, during operating process 700, inputs to deployed message-passing neural network 670 will be processed through all of MPNN elements 500 in parallel. Notably, during training in subprocess 650, the parameters of parallel MPNN elements 500 may diverge. In addition, even if the parameters of each MPNN element 500 are identical, different executions of the same encoder 532 may produce different latent tensors 534, and different executions of the same decoder 536 may produce different nodal tensors 540. Furthermore, different executions of identical MPNN elements 500 on the same inputs may produce different outputs, due to elements of randomness in MPNN element 500.

In a domain-driven embodiment, each MPNN element 500 may be supplied with the same domain information 810 via separate instances of neural network 820, which each produces a latent tensor 830. It should be understood that even if the same neural network 820 is applied to the same domain information 810 for each instance of MPNN element 500, the resulting latent tensors 830 may differ between instances of MPNN element 500. In other words, neural network 820 may not always produce the same output from the same input. In an alternative embodiment, the same latent tensor 830 may be used for every MPNN element 500 (e.g., tiled over the message-passing dimension).

Given the above, each MPNN element 500 will output a different nodal tensor 550. Accordingly, nodal tensors 550 may be combined into a single nodal tensor 950. In an embodiment, nodal tensors 550 are combined by concatenating nodal tensors 550 together into nodal tensor 950. However, it should be understood that nodal tensors 550 could be combined in any other suitable manner.

In an embodiment, a shortcut or "skip" connection may be used. The skip connection may combine input nodal tensor 510 with nodal tensor 950. For example, nodal tensor 510 may be appended to or otherwise concatenated with nodal tensor 950. A skip connection may render a deep-learning model, such as the disclosed message-passing neural network, more easily trainable.

Nodal tensor 950 with the concatenated nodal tensor 510 may be processed through a final fully connected network to produce a final output 960. In particular, the final fully connected network may convert this combined nodal tensor, representing the output of each MPNN element 500 and input nodal tensor 510, into a single final set of output features for each node. These output features may be used in the loss function during subprocess 650 of training process 600, and provided as the output in subprocess 740 of operating process 700. The use of a parallel plurality of MPNN elements 500 in this manner can improve the predictive performance (e.g., accuracy) of the overarching message-passing neural network. In particular, each MPNN element 500 may explore a different (e.g., overlapping or non-overlapping) solution space, thereby increasing the overall solution space that can be searched by deployed message-passing neural network 670.

11. Multi-Head Attention

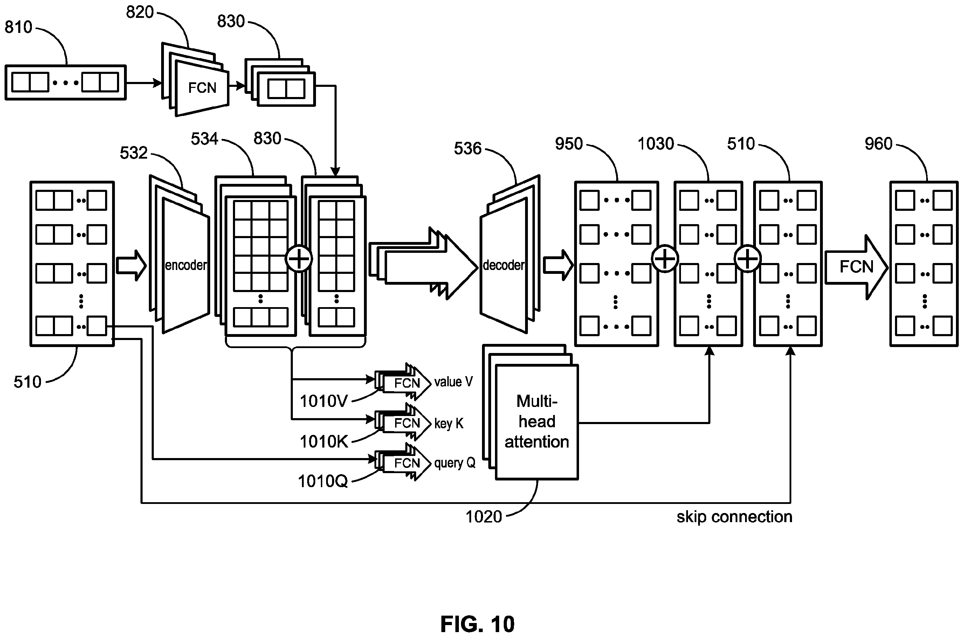

FIG. 10 illustrates a parallel plurality of domain-driven MPNN elements 500 with a multi-head attention mechanism 1020, according to an embodiment. For simplicity, intermediate nodal tensors 520 and 540 are omitted. In addition, components that have already been described herein will not be redundantly described with respect to this embodiment. Notably, the embodiment in FIG. 10 is identical to the embodiment in FIG. 9, except that a multi-head attention mechanism 1020 and supporting components have been added. Thus, any description with respect to the embodiment in FIG. 9 is equally applicable to the embodiment in FIG. 10.

In an embodiment, each of the parallel plurality of MPNN elements 500 has a respective multi-head attention mechanism 1020. Thus, the number of multi-head attention mechanisms 1020 is equal to the number of MPNN elements 500. An example of an implementation of multi-head attention mechanism 1020 is described in "Attention is All You Need," by A. Vaswani et al., arXiv: 1706.03762 [cs.CL], Dec. 2017, which is hereby incorporated herein by reference as if set forth in full.

Each multi-head attention mechanism 1020 may comprise a dot-product attention layer that accepts three inputs: a query, a key, and a value. Multi-head attention mechanism 1020 can be described as mapping a query (Q) and a set of key (K)-value (V) pairs to an output, which is computed as a weighted sum of the values (V) and where the weight assigned to each value (V) is computed by a compatibility function of the query (Q) with the corresponding key (K). The query, keys, values, and output are all vectors. The query (Q) for each multi-head attention mechanism 1020 may be derived from input nodal tensor 510. The key (K) for each multi-head attention mechanism 1020 may be derived from the concatenation of latent tensor 534 and latent domain tensor 830. Similarly, the value (V) for each multi-head attention mechanism 1020 may be derived from the concatenation of latent tensor 534 and latent domain tensor 830. In this manner, MPNN element 500 remains scalable as the number of nodes increases.

Each multi-head attention mechanism 1020 may comprise a graph attention network (GAT). A graph attention network uses masked self-attention and comprises graph attention layers stacked on top of each other. The input to each graph attention layer is a set of node embeddings, which pay attention to the embeddings of adjacent nodes. The output of each graph attention layer is a set of transformed embeddings.

The output of each multi-head attention mechanism 1020 may be an attention tensor (e.g., generated based on the query, value, and key) that is combined (e.g., concatenated) into an attention tensor 1030 having the same shape as input nodal tensor 510. Attention tensor 1030 may be combined with nodal tensor 950 and input nodal tensor 510. For example, nodal tensor 510 may be appended to or otherwise concatenated with attention tensor 1030 which may be appended to or otherwise concatenated with nodal tensor 950.

Nodal tensor 950 with the concatenated attention tensor 1030 and nodal tensor 510 may be processed through a final fully connected network to produce a final output 960. In particular, the final fully connected network may convert this combined nodal tensor, representing the output of each MPNN element 500, the output of each multi-head attention mechanism 1020, and input nodal tensor 510, into a single final set of output features for each node. These output features may be used in the loss function during subprocess 650 of training process 600, and provided as the output in subprocess 740 of operating process 700. Empirically, a multi-head attention mechanism 1020 can improve the accuracy of the overarching message-passing neural network.

12. Domain-Driven Message-Passing Neural Network

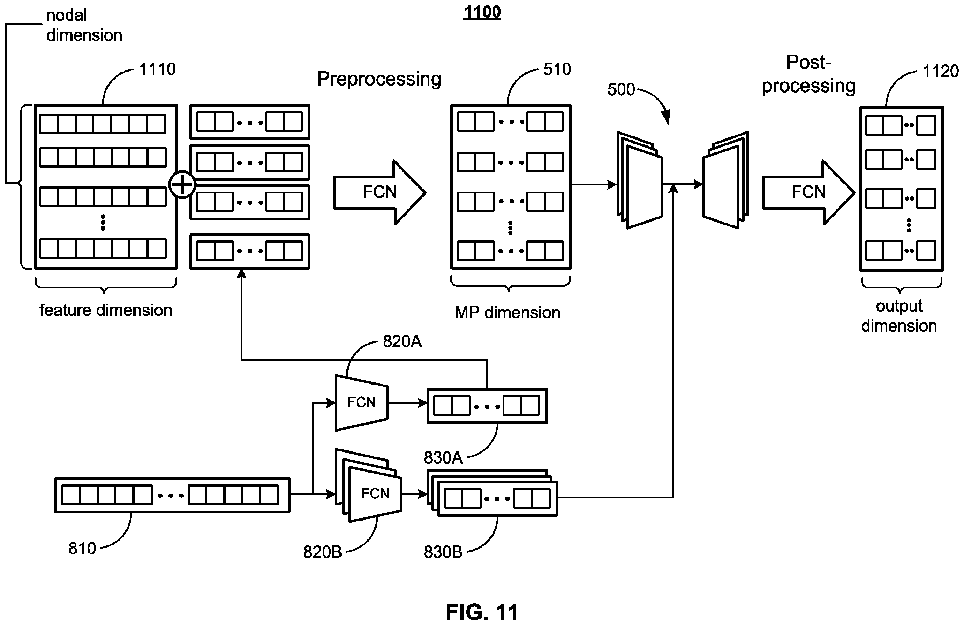

FIG. 11 illustrates a domain-driven message-passing neural network 1100, according to an embodiment. Message-passing neural network 1100 is one example of deployed message-passing neural network 670 and utilizes components that are described elsewhere herein. Thus, it should be understood that any descriptions of these components elsewhere herein apply equally to these components with respect to message-passing neural network 1100, and therefore, will not be redundantly included.

As illustrated, domain information 810 is passed through a plurality of neural networks 820, which may be fully connected networks. In particular, a neural network 820B is applied to domain information 810 (e.g., an indicator vector) in the domain dimension to produce latent domain tensor 830A in the latent domain dimension. Latent domain tensor 830A may be combined (e.g., appended to or otherwise concatenated with) with the feature vector for each node in an input nodal tensor 1110. In other word s, latent domain tensor 830A is tiled over the nodal dimension.

The resulting tensor, comprising input nodal tensor and the tiled latent domain tensors 830A, may be pre-processed by a fully connected network to produce nodal tensor 510 in the message-passing dimension. The message-passing dimension may be smaller than the feature dimension. In other words, pre-processing may comprise at least a small amount of compression to the feature dimension.

Nodal tensor 510 is then processed through one or more MPNN elements 500, as discussed elsewhere herein. While three parallel MPNN elements 500 are illustrated, it should be understood that message-passing neural network 1100 may comprise any number of MPNN elements 500.

For each MPNN element 500, a neural network 820A may be applied to domain information 810 in the domain dimension to produce a latent domain tensor 830A in the latent domain dimension. Latent domain tensor 830 may be incorporated into the corresponding MPNN element 500, for example, by appending or otherwise concatenating latent domain tensor 830 with latent tensor 534, as discussed elsewhere herein. In the event that there are a parallel plurality of MPNN elements 500, latent domain tensor 830 may be tiled over the parallel plurality of MPNN elements 500.

The output of the parallel plurality of MPNN elements 500 may be combined, as discussed elsewhere herein, and then post-processed by a fully connected network to produce an output nodal tensor 1120 in the output dimension. The output dimension may be equal to the number of output features. In other words, output nodal tensor 1120 may comprise one or more output features for each node in the graph. In the context of power-flow analysis, these output features may comprise voltage magnitude and voltage angle.

13. Example Applications

As discussed throughout the present disclosure, the disclosed embodiments may be applied to a target system 140 that comprises or consists of a power system. In this context, deployed message-passing neural network 670 may be used to perform power-flow analysis on an input, representing power generation and load (e.g., the described input features) and network topology (e.g., as an adjacency matrix), to produce steady-state power flow, comprising voltage magnitudes and angles (e.g., the described output features). Contingency analysis may be performed in a similar manner by incorporating domain information 810, representing contingency information, into MPNN element 500. In either case, this steady-state power flow may be used as an input to any downstream function that normally uses power flow.

As an example, the output (e.g., comprising voltage magnitudes and angles) of deployed message-passing neural network 670 can be used in a downstream function to calculate the amount of power flowing on power lines within the network of a power system. From the calculated amounts of power flow on the power lines, it can be determined whether any of the power lines are overloaded (e.g., beyond rated limits). This information is beneficial for managing network congestion, since operators can redispatch power generation in the network to eliminate the congestion. For example, if a power line is overloaded (e.g., the amount of power flow exceeds a predefined threshold), analysis and control module 330 (e.g., automatically or in response to an operator input) may activate, or increase the power supplied by, one or more power generators in another part of the network to relieve the congestion in the overloaded power line.

As another example, outputs of deployed message-passing neural network 670 for different contingency scenarios can be used to determine whether or not the network is secure. In this context, a network may be deemed insecure if the failure of a component of the network would cause substantial network congestion or cause the network voltage to shift outside of defined limits. Accordingly, one or more contingency scenarios may be supplied, in domain information 810, to deployed message-passing neural network 670 (e.g., by switching various nodes into a contingency state) to determine the effect on network congestion or network voltage when one or more components fail. This can aid an operator in system planning and/or system operation.

As another example, the output of deployed message-passing neural network 670 can be used to manage reactive power compensation. In particular, the output can be used to determine how much reactive power compensation must be applied to a load bus in order to improve the voltage profile at that load bus. Based on the determined reactive power compensation, analysis and control module 330 may, via control module 320, control (e.g., automatically or in response to an operator input) a reactive power compensation device on the network within the power system to adjust the voltage profile at the load bus.

As another example, the output of deployed message-passing neural network 670 can be used in system planning. For instance, when new equipment, such as an electrical line or transformer, needs to be installed, each of the old network topology and the new network topology (e.g., as adjacency matrices) may be provided to deployed message-passing neural network 670 to determine the power flow in each topology. The differences between the power flows for the old and new topologies can then be compared to understand the impact of the new equipment on the network of the power system. This understanding can inform system planning and investment decisions, inform measures for reducing power losses in the network, and/or the like.

It should be understood that the disclosed embodiments can be generalized to implement any other type of analysis, including, without limitation, load-flow analysis, security analysis and prediction, loadability analysis and prediction, optimal power flow, Volt-Var optimization and control, dynamic security analysis (DSA) and prediction, transient security analysis (TSA) and prediction, voltage stability analysis and prediction, generation and load shedding, grid reconfiguration, grid capacity planning, outage planning, reconfiguration of protection system settings, and/or the like. In addition, the implemented type of analysis can be incorporated into any grid-aware task, including, without limitation, simulation, optimization, partial decision-making, prescreening, warm-starting, what-if analysis, operator support, and/or the like.

In the case that the message-passing neural network is being used for dynamic simulation, the message-passing neural network must process time series data. In this case, appropriate input layers may be added to the message-passing neural network to convert the time series data into nodal tensor 510 for MPNN element(s) 500. These input layers may, for each node in the graph, convert the time series data for that node into a feature vector for that node. Such input layers may comprise, for example, one or more recurrent neural network (RNN) layers, convolutional neural network (CNN) layers, functional neural network layers, transformer models, or the like.

## 14. Example Embodiments

Disclosed embodiments may provide numerous advantages over the state of the art. A first objective achievable by disclosed embodiments is to facilitate learning in message-passing neural networks by enabling scalability for large graphs. A second objective achievable by disclosed embodiments is to incorporate domain information, such as contingency information, into the message passing in a message-passing neural network. A third objective achievable by disclosed embodiments is an increase in performance using a multi-head attention mechanism during training. A fourth objective achievable by disclosed embodiments is to facilitate machine learning of power-related prediction and decision tasks.

To address one or more of these objectives, example embodiments include, without limitation:

Embodiment 1: A method comprising using at least one hardware processor to: acquire a pre-training dataset comprising one or more batches that each includes a plurality of nodal tensors, wherein each of the plurality of nodal tensors has a nodal dimension, representing a plurality of nodes in a graph, and a feature dimension, representing a plurality of features of each of the plurality of nodes, and is labeled with one or more targets for each of the plurality of nodes; and pre-train a message-passing neural network element by minimizing a loss function, representing a difference between the one or more targets and an output of the message-passing neural network element, while, for each of the plurality of nodal tensors, for each of the plurality of features, applying an encoder of an encoder-decoder sequence to compress the nodal tensor from the nodal dimension to a latent dimension that is smaller than the nodal dimension, resulting in a latent tensor, processing the latent tensor through one or more neural network layers, and applying a decoder of the encoder-decoder sequence to decompress the processed latent tensor from the latent dimension to the nodal dimension. This embodiment facilitates the first objective.

Embodiment 2: The method of Embodiment 1, further comprising using the at least one hardware processor to, for each of the plurality of nodal tensors: before applying the encoder, transposing the nodal tensor from a first shape into a second shape; and after applying the decoder, transposing the nodal tensor from the second shape into the first shape. This embodiment facilitates the first objective.

Embodiment 3: The method of any preceding Embodiment, wherein acquiring the pre-training dataset comprises generating the pre-training dataset using internal iteration data, generated while solving a system of equations iteratively, to determine the one or more targets for each of the plurality of nodal tensors. This embodiment facilitates the first objective.

Embodiment 4: The method of Embodiment 3, further comprising using the at least one hardware processor to:

acquire a training dataset that is generated using a power flow solver to determine the one or more targets for each of another plurality of nodal tensors, without using internal iteration data; and after pre-training the message-passing neural network element, incorporate at least one instance of the message-passing neural network element into a message-passing neural network, and train the message-passing neural network, with the incorporated at least one instance of the message-passing neural network, using the training dataset. This embodiment facilitates the first objective.

Embodiment 5: The method of any preceding Embodiment, further comprising using the at least one hardware processor to, during the pre-training, for each of the plurality of nodal tensors, for each of the plurality of features, appending a contingency tensor to the latent tensor, wherein the contingency tensor indicates whether or not each of one or more contingencies is present. This embodiment facilitates the second objective.

Embodiment 6: The method of Embodiment 5, wherein the contingency tensor is an indicator vector, and wherein the one or more contingencies are encoded in the indicator vector. This embodiment facilitates the second objective.

Embodiment 7: The method of Embodiment 5 or 6, further comprising using the at least one hardware processor to: acquire contingency information indicating which of the one or more contingencies are applicable to the plurality of nodal tensors; apply a neural network to the contingency information to generate the contingency tensor for each of the plurality of nodal tensors, wherein the contingency tensor has a lower dimensionality than the contingency information. This embodiment facilitates the first and second objectives.

Embodiment 8: The method of any preceding Embodiment, wherein the message-passing neural network element uses a multi-head attention mechanism that, for each of the plurality of nodal tensors: derives a query from the nodal tensor; derives a value and a key from an output of the encoder; and generates an attention tensor based on the query, the value, and the key, wherein the attention tensor is appended to an output of the decoder. This embodiment facilitates the third objective.

Embodiment 9: The method of any preceding Embodiment, wherein the message-passing neural network element uses a skip connection that, for each of the plurality of nodal tensors, appends the nodal tensor comprising the plurality of features in the feature dimension to an output of the decoder. This embodiment facilitates the first objective.

Embodiment 10: The method of any preceding Embodiment, wherein the graph represents a power system. This embodiment facilitates the fourth objective.

Embodiment 11: The method of Embodiment 10, wherein the plurality of features in the first feature dimension comprises active power and reactive power, and wherein the one or more targets and the output of the message-passing neural network both comprise one or more electrical parameters. This embodiment facilitates the fourth objective.

Embodiment 12: The method of Embodiment 11, further comprising using the at least one hardware processor to: after pre-training the message-passing neural network element, train a message-passing neural network that comprises at least one instance of the message-passing neural network element using a training dataset; deploy the message-passing neural network to output the one or more electrical parameters for each of the plurality of nodes in the power system; determine power flow in electrical lines within the power system based on the one or more electrical parameters of the plurality of nodes; and adjust a configuration of the power system based on the determined power flow. This embodiment facilitates the fourth objective.

Embodiment 13: The method of Embodiment 12, further comprising using the at least one hardware processor to generate the training dataset using a power flow solver to determine the one or more targets for each of another plurality of nodal tensors. This embodiment facilitates the fourth objective.

Embodiment 14: The method of Embodiment 12 or 13, wherein adjusting the configuration comprises controlling an amount of power injected by at least one generator in the power system. This embodiment facilitates the fourth objective.

Embodiment 15: The method of any one of Embodiments 12 through 14, wherein a loss function for training the message-passing neural network utilizes a physics-based algorithm to calculate the plurality of features from the output of the message-passing neural network, and, for each nodal tensor in the training dataset, derives a loss based on a difference between the plurality of features, calculated for the nodal tensor using the physics-based algorithm, and the plurality of features in the nodal tensor. This embodiment facilitates the fourth objective.

Embodiment 16: The method of any preceding Embodiment, further comprising using the at least one hardware processor to, after the pre-training: replicate the message-passing neural network element to produce a plurality of message-passing neural network elements; incorporate the plurality of message-passing neural network elements into a message-passing neural network; and train the message-passing neural network, which incorporates the plurality of message-passing neural network elements, using a training dataset. This embodiment facilitates the first objective.

Embodiment 17: The method of Embodiment 16, wherein the plurality of message-passing neural network elements includes at least two parallel message-passing neural network elements, and wherein the message-passing neural network combines outputs of the at least two parallel message-passing neural network elements into a single output.

This embodiment facilitates the first objective.

Embodiment 18: The method of any preceding Embodiment, wherein the loss function utilizes a physics-based algorithm to calculate the plurality of features from the output of the message-passing neural network element, and, for each of the plurality of nodal tensors, derives a loss based on a difference between the plurality of features, calculated for the nodal tensor using the physics-based algorithm, and the plurality of features in the nodal tensor. This embodiment facilitates the first objective.

Embodiment 19: A system comprising: at least one hardware processor; and software configured to, when executed by the at least one hardware processor, perform the method of any one of Embodiments 1 through 18.

Embodiment 20: A non-transitory computer-readable medium having instructions stored thereon, wherein the instructions, when executed by a processor, cause the processor to: perform the method of any one of Embodiments 1 through 18.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are open-ended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

**Claims**

1. A method comprising using at least one hardware processor to:

   acquire a pre-training dataset comprising one or more batches that each includes a plurality of nodal tensors, wherein each of the plurality of nodal tensors has a nodal dimension, representing a plurality of nodes in a graph, and a feature dimension, representing a plurality of features of each of the plurality of nodes, and is labeled with one or more targets for each of the plurality of nodes; and
   pre-train a message-passing neural network element by minimizing a loss function, representing a difference between the one or more targets and an output of the message-passing neural network element, while, for each of the plurality of nodal tensors, for each of the plurality of features,

      applying an encoder of an encoder-decoder sequence to compress the nodal tensor from the nodal dimension to a latent dimension that is smaller than the nodal dimension, resulting in a latent tensor, processing the latent tensor through one or more neural network layers, and applying a decoder of the encoder-decoder sequence to decompress the processed latent tensor from the latent dimension to the nodal dimension.

2. The method of Claim 1, further comprising using the at least one hardware processor to, for each of the plurality of nodal tensors:

   before applying the encoder, transposing the nodal tensor from a first shape into a second shape; and
   after applying the decoder, transposing the nodal tensor from the second shape into the first shape.

3. The method of Claim 1, wherein acquiring the pre-training dataset comprises generating the pre-training dataset using internal iteration data, generated while solving a system of equations iteratively, to determine the one or more targets for each of the plurality of nodal tensors.

4. The method of Claim 3, further comprising using the at least one hardware processor to:

acquire a training dataset that is generated using a power-flow solver to determine the one or more targets for each of another plurality of nodal tensors, without using internal iteration data; and
after pre-training the message-passing neural network element,

incorporate at least one instance of the message-passing neural network element into a message-passing neural network, and
train the message-passing neural network, with the incorporated at least one instance of the message-passing neural network, using the training dataset.

5. The method of Claim 1, further comprising using the at least one hardware processor to, during the pre-training, for each of the plurality of nodal tensors, for each of the plurality of features, appending a contingency tensor to the latent tensor, wherein the contingency tensor indicates whether or not each of one or more contingencies is present.

6. The method of Claim 5, wherein the contingency tensor is an indicator vector, and wherein the one or more contingencies are encoded in the indicator vector.

7. The method of Claim 5, further comprising using the at least one hardware processor to:

acquire contingency information indicating which of the one or more contingencies are applicable to the plurality of nodal tensors;
apply a neural network to the contingency information to generate the contingency tensor for each of the plurality of nodal tensors, wherein the contingency tensor has a lower dimensionality than the contingency information.

8. The method of Claim 1, wherein the message-passing neural network element uses a multi-head attention mechanism that, for each of the plurality of nodal tensors:

derives a query from the nodal tensor;
derives a value and a key from an output of the encoder; and
generates an attention tensor based on the query, the value, and the key,
wherein the attention tensor is appended to an output of the decoder.

9. The method of Claim 1, wherein the message-passing neural network element uses a skip connection that, for each of the plurality of nodal tensors, appends the nodal tensor comprising the plurality of features in the feature dimension to an output of the decoder.

10. The method of Claim 1, wherein the graph represents a power system.

11. The method of Claim 10, wherein the plurality of features in the first feature dimension comprises active power and reactive power, and wherein the one or more targets and the output of the message-passing neural network both comprise one or more electrical parameters.

12. The method of Claim 11, further comprising using the at least one hardware processor to:

after pre-training the message-passing neural network element, train a message-passing neural network that comprises at least one instance of the message-passing neural network element using a training dataset;
deploy the message-passing neural network to output the one or more electrical parameters for each of the plurality of nodes in the power system;
determine power flow in electrical lines within the power system based on the one or more electrical parameters of the plurality of nodes; and
adjust a configuration of the power system based on the determined power flow.

13. The method of Claim 12, further comprising using the at least one hardware processor to generate the training dataset using a power flow solver to determine the one or more targets for each of another plurality of nodal tensors.

14. The method of Claim 12, wherein adjusting the configuration comprises controlling an amount of power injected by at least one generator in the power system.

15. The method of Claim 12, wherein a loss function for training the message-passing neural network utilizes a physics-based algorithm to calculate the plurality of features from the output of the message-passing neural network, and, for each nodal tensor in the training dataset, derives a loss based on a difference between the plurality of features, calculated for the nodal tensor using the physics-based algorithm, and the plurality of features in the nodal tensor.

16. The method of Claim 1, further comprising using the at least one hardware processor to, after the pre-training:

    replicate the message-passing neural network element to produce a plurality of message-passing neural network elements;
    incorporate the plurality of message-passing neural network elements into a message-passing neural network; and
    train the message-passing neural network, which incorporates the plurality of message-passing neural network elements, using a training dataset.

17. The method of Claim 16, wherein the plurality of message-passing neural network elements includes at least two parallel message-passing neural network elements, and wherein the message-passing neural network combines outputs of the at least two parallel message-passing neural network elements into a single output.

18. The method of Claim 1, wherein the loss function utilizes a physics-based algorithm to calculate the plurality of features from the output of the message-passing neural network element, and, for each of the plurality of nodal tensors, derives a loss based on a difference between the plurality of features, calculated for the nodal tensor using the physics-based algorithm, and the plurality of features in the nodal tensor.

19. A system comprising:

    at least one hardware processor; and
    software configured to, when executed by the at least one hardware processor,

        acquire a pre-training dataset comprising one or more batches that each includes a plurality of nodal tensors, wherein each of the plurality of nodal tensors has a nodal dimension, representing a plurality of nodes in a graph, and a feature dimension, representing a plurality of features of each of the plurality of nodes, and is labeled with one or more targets for each of the plurality of nodes, and
        pre-train a message-passing neural network element by minimizing a loss function, representing a difference between the one or more targets and an output of the message-passing neural network element, while, for each of the plurality of nodal tensors, for each of the plurality of features,

            applying an encoder of an encoder-decoder sequence to compress the nodal tensor from the nodal dimension to a latent dimension that is smaller than the nodal dimension, resulting in a latent tensor, processing the latent tensor through one or more neural network layers, and applying a decoder of the encoder-decoder sequence to decompress the processed latent tensor from the latent dimension to the nodal dimension.

20. A non-transitory computer-readable medium having stored thereon a message-passing neural network element, the message-passing neural network element comprising:

    an encoder-decoder sequence that

        accepts as input a nodal tensor having a nodal dimension, representing a plurality of nodes in a graph, and a feature dimension, representing a plurality of features of each of the plurality of nodes, and for each of the plurality of features,

            compresses the nodal tensor from the nodal dimension to a latent dimension that is smaller than the nodal dimension, resulting in a latent tensor, and
            decompresses the latent tensor from the latent dimension to the nodal dimension; and

one or more neural network layers that process the latent tensor, prior to decompression of the latent tensor by the encoder-decoder sequence.

**FIG. 1**

**200**

Processor
210

Main Memory
215

I/O Interface
235

Communication
Interface 240

Secondary
Memory 220

Internal Medium
225

Removable
Medium
230

255

250

External System
245

Baseband
260

Radio
265

Antenna
270

Communication Bus
205

**FIG. 2**

**FIG. 3**

**FIG. 4**

FIG. 5

# FIG. 6

**600**

START

610 — Acquire pre-training dataset

620 — Acquire training dataset

630 — Pre-train MPNN element

640 — Incorporate MPNN element into MPNN

650 — Train MPNN

660 — Deploy MPNN

END

# FIG. 7

**700**

START

750 — Undeploy?

710 — New Data?

No

No

Yes — END

Yes

720 — Extract features

730 — Input features to MPNN

670

740 — Provide output of MPNN to downstream function(s)

**FIG. 8**

**FIG. 9**

**FIG. 10**

EP 4 528 588 A1

FIG. 11

Europäisches
Patentamt

European
Patent Office

Office européen
des brevets

# EUROPEAN SEARCH REPORT

**Application Number**

EP 23 20 3196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU PEILI ET AL: "Frequency stability prediction of renewable energy penetrated power systems using CoAtNet and SHAP values", ENGINEERING APPLICATIONS OF ARTIFICIAL INTELLIGENCE., [Online] vol. 123, 15 March 2023 (2023-03-15), XP093137864, GB ISSN: 0952-1976, DOI: 10.1016/j.engappai.2023.106403 Retrieved from the Internet: URL:https://www.sciencedirect.com/science/article/pii/S0952197623005870> [retrieved on 2024-03-05] * the whole document * ----- | 1-20 | INV. G06N3/044 G06N3/0455 G06N3/0464 G06N3/08 |

**TECHNICAL FIELDS SEARCHED (IPC)**

G06N

The present search report has been drawn up for all claims

| Place of search | Date of completion of the search | Examiner |
|---|---|---|
| The Hague | 12 March 2024 | Ntarlagiannis, V |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. SCARSELLI et al.** The Graph Neural Network Model. *IEEE Transactions on Neural Networks*, vol. 20 (1), ISSN 1941-0093, 61-80
- **J. GILMER et al.** Neural Message Passing for Quantum Chemistry. *arXiv:1704.01212 [cs.LG*, April 2017
- **L. DUCHESNE et al.** Recent Developments in Machine Learning for Energy Systems Reliability Management. *Proceedings of the IEEE*, September 2020, vol. 108 (9), 1656-1676
- **A. VASWANI et al.** Attention is All You Need. *arXiv: 1706.03762 [cs.CL*, December 2017